## Europäisches Patentamt
## European Patent Office
## Office européen des brevets

(11) Publication number: **0 180 053**
**B1**

(12) **EUROPEAN PATENT SPECIFICATION**

(45) Date of publication of patent specification: **01.08.90**

(51) Int. Cl.⁵: **B 60 H 1/00**

(21) Application number: **85112496.6**

(22) Date of filing: **03.10.85**

(54) Linkage, particularly for climatising air delivery outlets of motor vehicles.

(30) Priority: **30.10.84 IT 5397784 u**

(43) Date of publication of application:
**07.05.86 Bulletin 86/19**

(45) Publication of the grant of the patent:
**01.08.90 Bulletin 90/31**

(84) Designated Contracting States:
**DE FR GB**

(56) References cited:
**DE-A-2 247 590**
**DE-A-2 911 949**
**DE-C- 812 279**

(73) Proprietor: **FOGGINI PROGETTI S.r.l.**
**Via Aosta, 17**
**I-10092 Beinasco Torino (IT)**

(72) Inventor: **Foggini, Paolo**
**Strada Moncalieri 2**
**I-10020 Revigliasco Torinese Torino (IT)**

(74) Representative: **Modiano, Guido et al**
**MODIANO, JOSIF, PISANTY & STAUB Modiano**
**& Associati Via Meravigli, 16**
**I-20123 Milano (IT)**

Courier Press, Leamington Spa, England.

EP 0 180 053 B1

# Description

This linkage, particularly for climatising air delivery outlets of motor vehicles is adapted for deflecting mechanical controls in general, and specifically controls for opening and closing throttle valves to cut off and throttle the air flow in delivery outlets for the climatizing air of motor vehicles.

Taking the steps from the consideration that nowadays all the elements in a kinematic train for deflecting a control as specified are formed from a hot moulded plastic material, the invention is directed to provide a toggle type linkage configured to afford - through the utilisation of the properties of said material - a great simplification both in construction, as regards the moulding process, and in assembling, as regards decreased labour time; the whole with a significant economical advantage.

Another important object of this invention is to provide an improved linkage from the functional standpoint, especially as regards smoothness of the control and reliability in operation, said control being completely free of jams even without any lubrication.

To achieve these objects, and others which will be apparent from the detailed description that follows, the linkage according to the present invention is characterized in that it comprises first and second linkage members, both of a hot mouldable thermoplastic material, said members being mutually interconnected with the interposition of a hinge joint formed of a strip of a plastic material integral with both members and located at the axis of relative rotation between said members, the position of said axis being defined by mutually interleaved guide members having the profile of an arc of a circle with its centre of curvature on said relative rotation axis.

Advantageously, according to the invention, the cooperating guide members comprise a lug in the form of an arc of a circle carried on a linkage member which penetrates a notch with a corresponding curvature carried on the other linkage member.

Further features and advantages will be apparent from the detailed description that follows, with reference to the accompanying drawings, where:

Figure 1 is a part-sectional view of a delivery outlet for the climatising air incorporating the toggle type linkage according to the invention; and

Figure 2 is an elevational detail view of the members which make up the linkage and their mutual connection.

In the drawings 10 designates the bin of a delivery outlet for the climatising air in motor vehicles, having a front base 11 whence a side half-disk 12 projects for controlling an airflow cutoff and/or throttling throttle valve 13 to open and close.

The half-disk 12 has a portion 12a of crank-like configuration to the end of which a toggle linkage 14 is articulated which is adapted to transmit the angular displacements of said half-disk toward the pin 15 of the throttle valve 13.

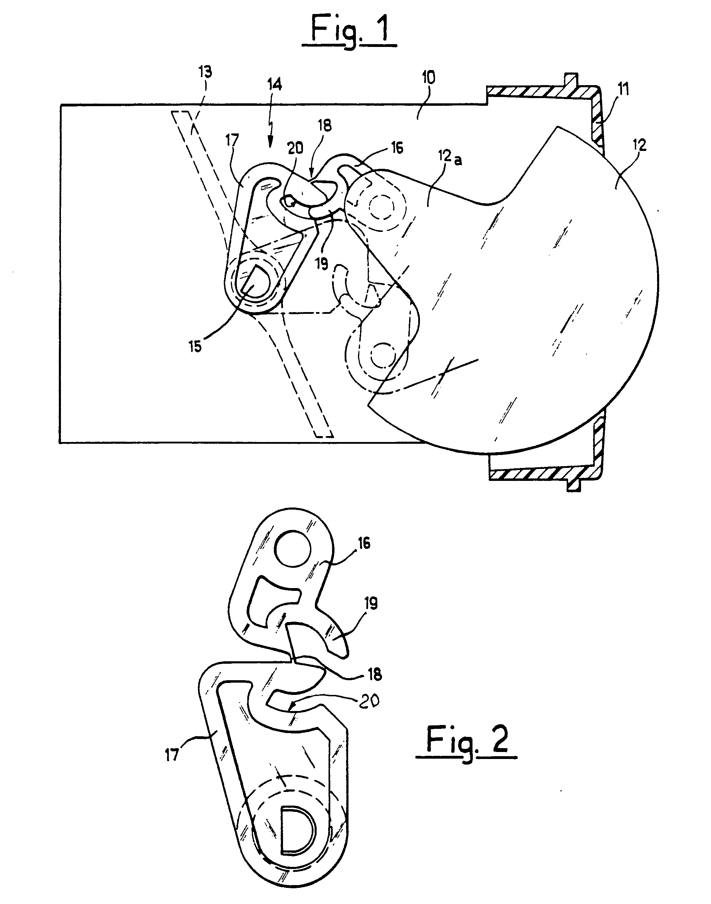

According to this invention, the toggle linkage 14 (Figure 2) is composed of a first linkage member 16 and a second linkage member 17 both formed from a mouldable thermoplastic material advantageously selected from the group including polypropylene homopolymer and the thermoplastics known under the trade name of "NYLON". Between said first and second linkage members there is interposed a swivel joint comprising a strip of a plastic material 18 integral with both members. Preferably, the strip 18 is made of the same material as the members 16, 17. The strip 18, which is moulded with the members themselves, serves as an articulation hinge between the members of the toggle linkage and is located at the virtual axis of relative rotation between said members.

The position of said axis is defined and held unchanged - for the purpose of relieving the strip 18 of stresses tending to tear it - by cooperating guide members, in mutually interleaved relationship. Such members advantageously comprise a lug 19 in the form of an arc of a circle carried on the member 16 which penetrates a notch 20 with a corresponding curvature, carried on the other member 17 of the linkage.

As clearly shown in figure 1, the centre of curvature of said lug and notch cooperating together is located on the virtual hinge axis coinciding with the neutral axis of the strip 18. The thickness of the latter is commensurate to the material selected and is in the range of 3 to 10 tenths of a millimetre.

## Claims

1. A linkage, particularly for climatising air delivery outlets of motor vehicles, characterized in that it comprises first and second linkage members (16, 17), both of a mouldable thermoplastic material, said members being mutually connected with the interposition of a hinge joint (18) formed of a strip of a plastic material, integral with both members and, located at the axis of relative rotation between said members (16, 17), the position of said axis being defined by mutually interleaved guide members (19, 20) having the profile of an arc of a circle with its centre of curvature on said relative rotation axis.

2. A linkage according to Claim 1, characterized in that the cooperating guide members comprise a lug (19) configured as an arc of a circle and carried on one linkage member (16), which penetrates a notch (20) of corresponding curvature carried on the other linkage member (17).

3. A linkage according to Claims 1 and 2, characterized in that the axis of relative rotation between said linkage members (16, 17) coincides with the neutral axis of said strip forming the swivel hinge (18).

4. A linkage according to the preceding claims, characterized in that the thickness of the strip forming the swivel hinge is in the range of 3 to 10 tenths of a millimetre.

## Patentansprüche

1. Gestänge, insbesondere für Lüftungsöffnungen in Kraftfahrzeugen, dadurch gekennzeichnet, daß es erste und zweite Teile der Gestängeglieder (16, 17) umfaßt, die beide aus gießbarem Kunststoffmaterial bestehen, wobei beide Teile wechselseitig mit einem dazwischen liegenden Scharniergelenk (18) verbunden sind, das aus einem Streifen eines Kunsstoffmaterials geformt, integral mit beiden Teilen ausgebildet ist und an der relativen Drehachse zwischen den Gliedern (16 und 17) liegt, wobei die Lage dieser Achse definiert ist von wechselseitig überlappten Führungsteilen (19, 20), die ein Profil eines Kreisbogens haben, der mit seinem Krümmungsmittelpunkt auf der besagten relativen Drehachse liegt.

2. Gestänge nach Anspruch 1, dadurch gekennzeichnet, daß die zusammenwirkenden Führungsteile eine als ein Kreisbogen ausgebildete und an einem Gestängeglied (16) befestigte Nase (19) umfaßt, die in einen Ausschnitt (20) der entsprechenden vom anderen Teil (17) des Gestängegliedes getragenen Kurve eingreift.

3. Gestänge nach Anspruch 1 und 2, dadurch gekennzeichnet, daß die Achse der relativen Drehung zwischen den Teilen des Gestängegliedes (16, 17) mit der neutralen Achse des das Scharniergelenk (18) bildenden Streifens zusammenfällt.

4. Gestänge nach den vorhergehenden Ansprüchen, dadurch gekennzeichnet, daß die Dicke des das Scharniergelenk (18) bildenden Streifens zwischen 3/10 und 10/10 eines Millimeters beträgt.

## Revendications

1. Tringlerie, en particulier pour les sorties d'air conditionné de véhicules à moteur, caractérisé en ce qu'elle comprend des premier et second éléments de tringlerie (16, 17), les deux étant réalisés en une matière thermoplastique moulable, lesdits éléments étant reliés mutuellement avec interposition d'un joint formant charnière (18) formé par une bande en matière plastique, d'un seul tenant avec les deux éléments et disposée sur l'axe de rotation relative entre lesdits éléments (16, 17), la position dudit axe étant définie par des éléments de guidage à emboîtement mutuel (19, 20) présentant le profil d'un arc de cercle dont le centre de courbure est sur ledit axe de rotation relative.

2. Tringlerie selon la revendication 1, caractérisée en ce que les éléments de guidage coopérants comprennent une patte (19) configurée sous forme d'un arc de cercle et supportée sur un élément (16) de la tringlerie, qui pénètre dans une encoche (20) de courbure correspondante prévue dans l'autre élément de tringlerie (17).

3. Tringlerie selon les revendications 1 et 2, caractérisée en ce que l'axe de rotation relative entre lesdits éléments de tringlerie (16, 17) coïncide avec l'axe neutre de ladite bande qui forme la charnière de pivotement (18).

4. Tringlerie selon les revendications précédentes, caractérisée en ce que l'épaisseur de la bande qui forme la charnière de pivotement est située dans la plage de 3 à 10 dixièmes de millimètre.

## Fig. 1

## Fig. 2